# EUROPÄISCHE PATENTSCHRIFT

(11) **EP 2 944 825 B1**
(45) Veröffentlichungstag und Bekanntmachung des Hinweises auf die Patenterteilung: **12.08.2020**
(21) Anmeldenummer: 14167971.2
(22) Anmeldetag: 12.05.2014
(51) Int. Cl.: F04D 29/42, B29L 31/00, B29C 45/33, B29C 45/44

(54) **Pumpengehäuse mit drei Stutzen**
Pump housing with three flanges
Boîtier de pompe doté de trois brides

(43) Veröffentlichungstag der Anmeldung: 18.11.2015
(73) Patentinhaber: Grundfos Holding A/S, 8850 Bjerringbro (DK)
(72) Erfinder: Malikova, Ioulia, 8850 Bjerringbro (DK); Domino, Bent Ole Emdal, 8620 Kjellerup (DK); Mønsted, Anders, 8660 Skanderborg (DK)
(74) Vertreter: Patentanwälte Vollmann Hemmer Lindfeld Partnerschaft mbB

(56) Entgegenhaltungen:
- DE-A1- 2 321 165
- DE-A1- 2 361 952
- DE-C1- 10 003 644
- DE-U1- 20 005 247
- DE-U1- 29 901 065
- FR-A1- 2 402 785

## Beschreibung

Die Erfindung betrifft ein Pumpengehäuse mit den im Oberbegriff des Anspruchs 1 angegebenen Merkmalen.

Pumpengehäuse von Kreiselpumpen, insbesondere von Heizungsumwälzpumpen kleiner und mittlerer Leistung bis 250 Watt elektrischer Leistungsaufnahme, die Gegenstand der vorliegenden Anmeldung sind, sind Produkte, die in großen Stückzahlen hergestellt werden. Die Pumpengehäuse solcher Pumpen werden zunehmend nicht mehr aus Metall, sondern aus Kunststoff hergestellt und sind dann als Kunststoffspritzgussbauteile ausgebildet. Sie weisen typischerweise einen Sauganschluss und einen Druckanschluss auf und sind zur Aufnahme eines Kreiselpumpenlaufrades vorgesehen, welches auf der Welle eines elektrischen Antriebsmotors sitzt, der an das Pumpengehäuse angeflanscht ist.

Es zählen auch Pumpengehäuse zum Stand der Technik, bei denen das Pumpengehäuse zumindest Teil einer Saugkammer bildet, also einen dem Saugmund des Laufrades vorgelagerten Raum, der typischerweise zur Beruhigung der eingehenden Strömung und zur Luft- und/oder Schmutzabscheidung vorgesehen ist.

Derartige Pumpengehäuse nach dem Stand der Technik werden zusammen mit dem Motor zu einem Pumpenaggregat verbaut, das an geeigneter Stelle durch den Monteur in eine Heizungsanlage eingebaut wird oder aber mit weiteren individuell angepassten, ebenfalls aus Kunststoffspritzguss bestehenden Armaturengehäusen, z. B. in einer Heiztherme eingebaut, um das Wärmeträgermedium, typischerweise Wasser, in einem oder mehreren Heizkreisen umzuwälzen. Unterschiedliche Einbausituationen verlangen in der Regel unterschiedliche Pumpengehäuseausbildungen, was aufwändig und teuer ist. Auch hat sich der quasi schwebende Einbau solcher Aggregate in die Verrohrung von Heizungsanlagen als nicht immer optimal erwiesen, da Spannungen und Schwingungen des Rohrsystems in das Pumpengehäuse eingeleitet werden, da das Aggregat anlagenseitig nicht oder zumindest nicht ausreichend abgestützt ist. Dies kann insbesondere bei Kunststoffgehäusen zu Problemen führen. Auch stellt sich das Problem, dass bei modernen, auf niedrigem Energieniveau arbeitenden Heizsystemen, große Volumenströme umzuwälzen sind, um diese zu versorgen.

Vor diesem Hintergrund liegt der Erfindung die Aufgabe zugrunde, ein gattungsgemäßes Pumpengehäuse in der Vielseitigkeit seiner Anwendungen unter Berücksichtigung der vorgenannten Probleme zu verbessern.

Diese Aufgabe wird gemäß der Erfindung durch ein Pumpengehäuse mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben. Hierbei können die in den Unteransprüchen und der Beschreibung angegebenen Merkmale jeweils für sich, aber auch in geeigneter Kombination die Offenbarung weiter ausgestalten.

Bei dem erfindungsgemäßen Pumpengehäuse handelt es sich um ein solches, welches als Kunststoffspritzgussbauteil und zum Anschluss an einen Elektromotor ausgebildet ist. Es weist mindestens einen in einen Saugraum mündenden Sauganschluss auf und ist mit einem Druckanschluss versehen, der in einen an den Saugraum anschließenden Raum zur Aufnahme eines von dem Elektromotor angetriebenen Pumpenlaufrades mündet. Gemäß der Erfindung sind zwei in den Saugraum mündende Sauganschlüsse vorgesehen, wobei der eine Sauganschluss und der Druckanschluss an entgegengerichteten Seiten angeordnet sind.

Die Anordnung von Saug- und Druckanschluss an entgegengesetzten Seiten ist besonders vorteilhaft, da das Pumpengehäuse gegebenenfalls als Inline-Gehäuse ausgestattet werden kann und insbesondere zur Eingliederung in vorhandene Rohrleitungsnetze geeignet ist. Dadurch, dass ein Sauganschluss und der Druckanschluss an abgewandt gegenüberliegenden Seiten liegen, also an um 180° zueinander ausgerichteten Seiten, ist eine besonders einfache Eingliederung in vorhandene Rohrleitungssysteme möglich. Dabei kann die sonst übliche Schräganordnung des Druckstutzens vermieden werden, wodurch das Pumpengehäuse einfacher einzubauen ist. Darüber hinaus ermöglicht der weitere Sauganschluss den unmittelbaren Anschluss eines weiteren Heiz- oder anderen Umwälzkreises an die Pumpe, wodurch beim Einbau in Rohrleitungsnetze eine höhere Einbaustabilität gewährleistet ist.

Gemäß einer vorteilhaften Weiterbildung der Erfindung ist der andere Sauganschluss an keiner der beiden Seiten angeordnet, an welcher die beiden anderen Anschlüsse, also der eine Sauganschluss und der Druckanschluss, angeordnet sind. Besonders vorteilhaft ist es, wenn der andere Sauganschluss an einer Seite angeordnet ist, die senkrecht zu den beiden entgegengerichteten Seiten gerichtet ist. Besonders vorteilhaft ist es, wenn der andere Sauganschluss an einer Seite angeordnet ist, die senkrecht zu den beiden entgegengerichteten Seiten gerichtet ist, an denen der eine Sauganschluss und der Druckanschluss angeordnet sind. So kann das Pumpengehäuse also an drei vorzugsweise um 90° zueinander ausgerichteten Seiten mit den entsprechenden Leitungen verbunden werden, was insbesondere montagetechnisch und hinsichtlich der Stabilität von Vorteil ist.

Dabei sind die Anschlüsse am Pumpengehäuse vorteilhaft derart angeordnet, dass ihre Längsachsen in einer Ebene liegen, vorzugsweise in einer Ebene, welche parallel zur Achse des Pumpenlaufrades bzw. zur Längs-Mittelachse des das Pumpenlaufrad aufnehmenden Raumes innerhalb des Pumpengehäuses ist. Unter Längsachse eines Anschlusses im Sinne der Erfindung ist die Achse zu verstehen, welche den Anschluss mittig durchsetzt und den dahinter laufenden Leitungsabschnitt mittig durchläuft, wenn dieser geradlinig anschließt und ausgebildet ist. Bei gekrümmten Leitungsabschnitten ist die Längsachse des Anschlusses definiert durch eine gedachte Achse, welche in der Mitte des Anschlusses und senkrecht zu einer gedachten Ebene angeordnet ist, welche sein freies Ende abschließt, also beispielsweise bei einem Flansch die Ebene, in welcher die Flanschfläche liegt.

Eine besonders kompakte Ausgestaltung des Pumpengehäuses und somit auch eines damit bestückten Kreiselpumpenaggregats ergibt sich, wenn der eine Sauganschluss und der Druckanschluss nicht nur entgegengerichtet, sondern achsversetzt zueinander angeordnet sind. Es kann jedoch auch vorteilhaft sein, diese Anschlüsse achsgleich anzuordnen, so dass sich ein Pumpengehäuse der Inline-Bauart ergibt, bei dem die Längsachsen dieser Anschlüsse übereinstimmen.

Gemäß einer vorteilhaften Weiterbildung des erfindungsgemäßen Pumpengehäuses ist dieses im Bereich der Saugkammer mit einer im Wesentlichen kreiszylindrischen Form ausgestattet, wobei zumindest die Längsachsen der Sauganschlüsse in einer Ebene liegen, die den Zylindermantel schneidet, tangiert oder mit geringem Abstand passiert, und zwar vorzugsweise so angeordnet ist, dass diese Ebene parallel zur Zylinderachse, also der Längs-Mittelachse des Pumpengehäuses angeordnet ist. Unter geringem Abstand im Sinne der vorliegenden Erfindung ist ein Abstand zu verstehen, der in jedem Fall kleiner als der Nenndurchmesser eines Leitungsanschlusses ist, der in dieser Ebene liegt. Bei einer solchen Anordnung liegen die Leitungsanschlüsse typischerweise außerhalb der durch den Zylindermantel des Saugraums gebildeten Kontur. Je nach Abstand ergibt sich dabei, dass die Anschlüsse mehr oder weniger weit in die Zylinderwand eingreifend im Saugraum münden. Eine solche Anordnung ermöglicht vergleichsweise große Anschlussquerschnitte, ohne die Abmessungen des Gehäuses merklich zu vergrößern.

Dabei liegen in dieser Ebene vorteilhaft nicht nur die beiden Sauganschlüsse, sondern auch der Druckanschluss.

Da das erfindungsgemäße Pumpengehäuse einen Saugraum umfasst, der vor dem Saugmund der Pumpe liegt, können in diesem Bereich vorteilhaft weitere funktionelle Elemente des Pumpenaggregats untergebracht werden. Besonders vorteilhaft ist es, wenn in Einbaulage der obere Teil des Saugraumes Teil eines Luftabscheiders bildet oder einen Anschluss für einen Luftabscheider an seiner Oberseite aufweist, wobei die Sauganschlüsse im unteren Teil des Saugraumes münden. Die vorbeschriebene Oben-Unten-Anordnung ergibt sich gravitationsbedingt, versteht sich also bei einem bestimmungsgemäßen Einbau des Pumpengehäuses bzw. des damit ausgestatteten Pumpenaggregats. Die in der Flüssigkeit nach oben aufsteigende Luft wird durch einen Luftabscheider vor Eintritt in den Saugmund der Pumpe abgeleitet, die Sauganschlüsse münden dabei im unteren Teil des Saugraumes, sodass der Saugraum auf natürliche Weise die Luftabscheidung unterstützt. Dabei ergibt sich eine kompakte Bauform des Pumpengehäuses, da die Leitungsanschlüsse sämtlichst unten am Gehäuse vorgesehen sind.

Die Leitungsanschlüsse sind typischerweise nicht direkt an der Saugkammer angebunden, sondern über Leitungsabschnitte, welche den jeweiligen Anschluss mit der Saugkammer bzw. mit dem Druckraum verbinden. Wenn bei einer solchen Anordnung wie vorbeschrieben die Sauganschlüsse und vorteilhaft auch der Druckanschluss in einer Ebene liegen, dann ergeben sich an der Unterseite des Pumpengehäuses solche Leitungsabschnitte, die zumindest noch eine rohrleitungsähnliche Struktur aufweisen und dem Pumpengehäuse insbesondere in diesem Bereich eine hohe Eigenstabilität verleihen. Um diese weiter zu erhöhen und eine gemeinsame Aufstandsfläche zu bilden, ist es von Vorteil, diese Leitungsabschnitte mit mindestens einer Rippe zu versehen, wobei die Rippe bzw. Rippen vorteilhaft so geführt sind, dass sie alle Leitungsabschnitte miteinander verbinden und somit eine stabile Aufstandsfläche an der Unterseite des Gehäuses bilden. Diese ergibt sich bei einer T-förmigen Anordnung der Leitungsanschlüsse unterhalb der Saugkammer.

Dabei sind gemäß einer Weiterbildung der Erfindung im Bereich der Rippen vorteilhaft Auflager vorgesehen, die zur Befestigung des Pumpengehäuses an einem Fundament oder einem Chassis dienen und die vorzugsweise Ausnehmungen zur Aufnahme von Befestigungsschrauben aufweisen, sodass das Pumpengehäuse und hierüber auch das gesamte Pumpenaggregat an einem Fundament, einer Stütze oder dergleichen festgelegt werden kann. Eine solche Anordnung ist insbesondere auch für den Einbau in Heizungsanlagen von Vorteil, da damit der eingangs geschilderte schwebende Einbau vermieden werden kann.

Um die Fertigung des Spritzgussgehäuses kostengünstig und einfach zu gestalten, ist gemäß einer Weiterbildung der Erfindung zwischen dem Saugraum und dem Raum zur Aufnahme des Pumpenlaufrades eine umlaufende Anlagefläche für eine einlegbare Deflektorplatte vorgesehen, mit welcher der Saugraum gegenüber dem Druckraum hydraulisch getrennt ist. Eine solche Deflektorplatte ist eine ringförmige Platte, die mit ihrem Außenumfang oder dem Außenbereich ihrer Flachseite dichtend innerhalb des Pumpengehäuses anliegt oder mit diesem durch Schweißen, Kleben oder anderweitig verbunden ist und eine zentrale mittige Ausnehmung aufweist, die den eigentlichen Saugmund der Pumpe bildet und die bei dem daran anschließenden Pumpenlaufrad Saug- und Druckseite hydraulisch voneinander trennt.

Vorteilhaft weist das Pumpengehäuse am Saugraum mindestens einen Anschluss für einen Sensor, insbesondere für einen Drucksensor auf, sowie zusätzlich oder alternativ für eine Armatur, insbesondere ein Überdruckventil, mit welchem eine Überlastung des Pumpengehäuses durch zu hohen Druck wirksam verhindert werden kann. Ein solcher Anschluss für einen Drucksensor ist von Vorteil, um die Pumpe in eine Regelung einbinden zu können.

Besonders vorteilhaft ist es, wenn das Pumpengehäuse hinsichtlich des Durchmessers des Saugraumes so dimensioniert ist, dass dieser den 3- 4-fachen Durchmesser eines Sauganschlussquerschnittes misst. Dabei entspricht der Durchmesser des Saugraumes üblicherweise dem Pumpenradnenndurchmesser. Hierdurch kann bei üblichen Laufradabmessungen von Pumpen kleiner und mittlerer Leistung ein vergleichsweise großer Leitungsquerschnitt realisiert werden, insbesondere im Bereich der Sauganschlüsse, aber auch druckanschlussseitig.

Das erfindungsgemäße Pumpengehäuse ist als einstückiges Kunststoffspritzgussteil ohne verlorene Kerne hergestellt. Hierdurch ist eine kostengünstige Herstellung in Großserie möglich. Das Werkzeug zur Herstellung des Gehäuses weist entsprechende Zieh- oder Schwenkkerne auf. Im Bereich des Druckraumes, also dort, wo das Pumpenlaufrad innerhalb des Gehäuses angeordnet ist, kann der übliche Volutenbereich mit Hinterschneidungen im Umfang vorgesehen sein, da hier üblicherweise genügend Freiraum vorhanden ist, um den Kern vor dem Ausziehen aus dem Werkstück radial entsprechend zu verkleinern.

Das erfindungsgemäße Pumpengehäuse wird vorteilhaft in einem Kreiselpumpenaggregat eingesetzt, welches insbesondere im Bereich der Klimatechnik vorteilhaft einsetzbar ist, beispielsweise als Heizungsumwälzpumpe. Selbstverständlich kann eine solche Umwälzpumpe auch in einer Klimaanlage, d. h. auch zur Umwälzung eines Kühlkreislaufes, eingesetzt werden. Dabei wird als Elektromotor vorteilhaft ein Nasslaufmotor, also ein Spaltrohrmotor, eingesetzt, dessen Antriebswelle das Pumpenlaufrad trägt, welches im Druckraum angeordnet ist.

Die Erfindung ist nachfolgend anhand eines in der Zeichnung dargestellten Ausführungsbeispiels näher erläutert. Es zeigen:

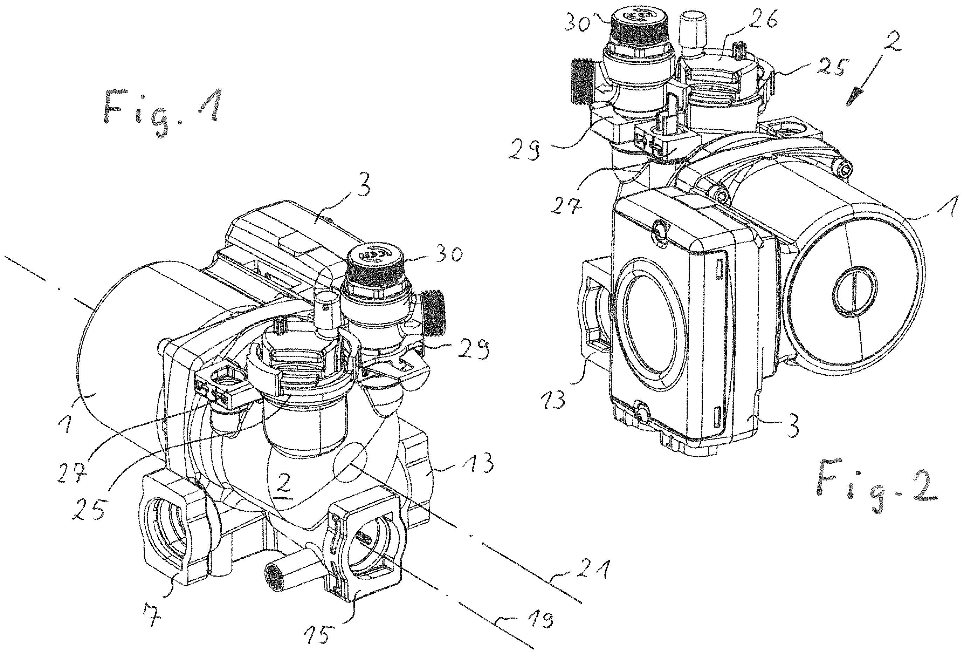

- Fig. 1: in stark vereinfachter, schematischer, perspektivischer Darstellung ein Pumpenaggregat mit einem Pumpengehäuse gemäß der Erfindung,
- Fig. 2: das Aggregat gemäß Fig. 1 von der Rückseite in Darstellung nach Fig. 1,
- Fig. 3: eine perspektivische Ansicht auf das Pumpengehäuse von der Motorseite,
- Fig. 4: eine weitere perspektivische Ansicht auf das Pumpengehäuse von der Motorseite,
- Fig. 5: eine Ansicht auf das Pumpengehäuse von der Motorseite,
- Fig. 6: eine Seitenansicht in Richtung des Pfeils VI in Fig. 5,
- Fig. 7: eine Seitenansicht in Richtung des Pfeils VII in Fig. 5,
- Fig. 8: eine Ansicht auf das Pumpengehäuse von oben,
- Fig. 9: eine Ansicht auf das Pumpengehäuse von unten und

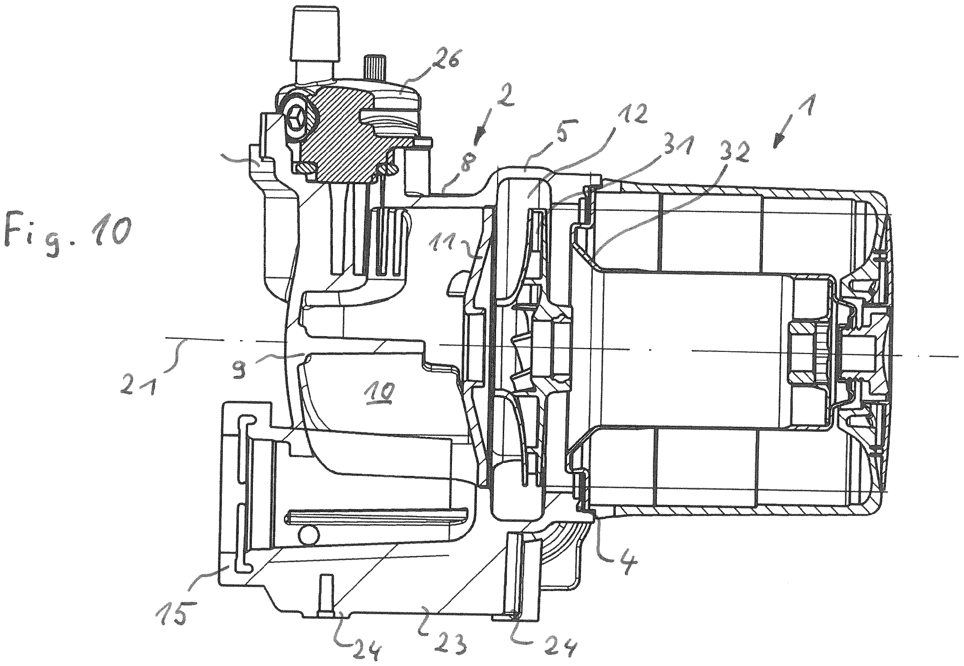

- Fig. 10: einen Längsschnitt durch das Pumpenaggregat nach Fig. 1.

Das anhand der Figuren dargestellte Heizungsumwälzpumpenaggregat weist einen elektrischen Antriebsmotor 1 auf, der als Nasslaufmotor ausgebildet ist, d. h. ein Spaltrohr 32 aufweist, in dem ein Rotor mit einer Welle drehbar gelagert ist. Der Innenraum des Spaltrohrs 32 ist flüssigkeitsgefüllt und die im Rotor des Motors 1 verankerte Welle trägt an ihrem freien Ende ein Pumpenlaufrad 31, welches in einem an dem Antriebsmotor 1 angeflanschten Pumpengehäuse 2 angeordnet ist, wie das bei derartigen Kreiselpumpenaggregaten üblich ist. Seitlich am Antriebsmotor 1 ist ein Klemmenkasten 3 angeordnet, über den nicht nur die im Stator angeordneten Spulen angeschlossen und mit dem elektrischen Versorgungsnetz verbunden sind, sondern der darüber hinaus auch einen Frequenzumrichter umfasst, über den eine Drehzahlsteuerung des Motors 1 erfolgen kann.

Das Pumpengehäuse 2 hat eine im Wesentlichen becherförmige Form. Es weist einen Flansch 4 auf, der zur Verbindung mit dem entsprechend ausgebildeten Gegenflansch am Antriebsmotor 1 vorgesehen ist. Hierzu sind vier Schrauben in den seitlich vorspringenden Eckbereichen des Flansches 4 vorgesehen, mit denen Antriebsmotor 1 und Pumpengehäuse 2 lösbar miteinander verbunden sind.

An den Flansch 4 schließt sich ein ringförmiger und außen zylindrischer Abschnitt 5 an, der innenseitig ein Spiralgehäuse bildet, welcher den vom Laufrad erzeugten Drall der Strömung am Umfang des Laufrads in Druck umwandelt. Dieser ringförmige Abschnitt 5 umgibt den Druckraum der Pumpe. Von diesem ringförmigen Abschnitt 5 geht etwa tangential ein Leitungsabschnitt 6 ab, dessen freies Ende den Druckanschluss 7 der Pumpe bildet.

An den zylindrischen und ringförmigen Abschnitt 5 schließt sich zu der vom Flansch 4 abgewandten Seite ein im Wesentlichen zylindrischer Gehäuseabschnitt 8 an, der endseitig durch eine abgerundete Kappe 9 abgeschlossen ist. Innerhalb dieses im Wesentlichen zylindrischen Gehäuseabschnitts 8 mit der abschließenden Kappe 9 ist ein Saugraum 10 innerhalb des Pumpengehäuses 2 gebildet, der durch eine Deflektorplatte 11 abgeschlossen wird, welche von der Motorseite in das Pumpengehäuse 2 eingesetzt ist und dort an einer umlaufenden Anlagefläche im Inneren des Pumpengehäuses 2 zwischen dem zylindrischen Gehäuseabschnitt 8 und dem ringförmigen Abschnitt 5 anliegt. Diese Platte 11 trennt den Saugraum 10 vom Druckraum 12 hydraulisch.

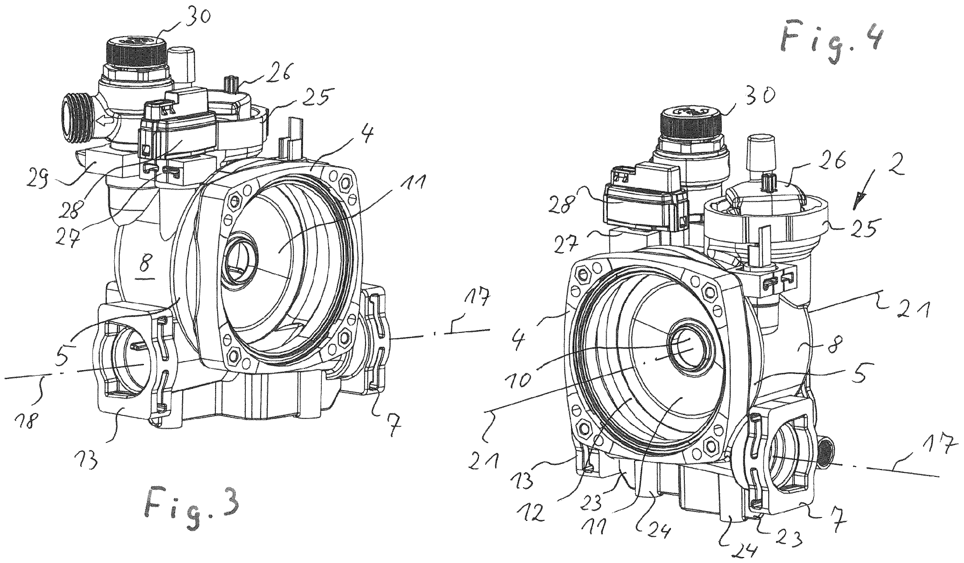

Das Pumpengehäuse 2, welches in den Figuren 3 und 4 in Betriebsstellung dargestellt ist, weist einen ersten Sauganschluss 13 auf, der über einen Leitungsabschnitt 14, der Teil des Pumpengehäuses 2 bildet, im Saugraum 10 mündet. Weiterhin weist das Pumpengehäuse einen zweiten Sauganschluss 15 auf, der über einen ebenfalls Teil des Pumpengehäuses 2 bildenden Leitungsabschnitt 16 im Saugraum 10 mündet. Der erste Sauganschluss 13 ist auf der entgegengesetzten Seite des Gehäuses 2 wie der Druckanschluss 7 angeordnet. Der zweite Sauganschluss 15 ist auf einer Seite des Gehäuses 2 angeordnet, welche senkrecht zu der Seite des Druckanschlusses 7 sowie senkrecht zu der Seite des ersten Sauganschlusses 13, also genau zwischen diesen Seiten, angeordnet ist. In der dargestellten Ausführungsform sind die zu den Anschlüssen 7, 13 und 15 führenden Leitungsabschnitte 6, 14, 16 geradlinig ausgebildet, sodass die Längsachsen 17, 18, 19 dieser Anschlüsse 7, 13, 15 die Längsmitte der Leitungsabschnitte 6, 14, 16 bilden. Die Längsachse 17 von dem Druckanschluss 7 und die Längsachse 18 des ersten Sauganschluss 13 sind parallel, jedoch versetzt zueinander. Die Längsachse 19 des Sauganschlusses 15 ist senkrecht zu den vorgenannten Längsachsen 17, 18 angeordnet. Alle Längsachsen 17, 18, 19 liegen in einer gemeinsamen Ebene 20, die parallel zur Längsmittelachse 21 von Druckraum 12 und Saugraum 10 angeordnet ist. Diese Längsmittelachse 21 bildet auch die Drehachse des Laufrades der Pumpe.

Die Ebene 20 liegt in der vorliegenden Ausführungsform etwa tangential zum Saugraum 10. Hieraus ergibt sich eine Anordnung der Leitungsabschnitte 6, 14, 16 im Wesentlichen an der Unterseite des Pumpengehäuses 2, wobei die Leitungsabschnitte 6, 14, 16 den zylindrischen Teil des Pumpengehäuses 8 bzw. den ringförmigen Abschnitt 5 schneiden und so einen Leitungszugang zu den jeweiligen Räumen 10 bzw. 12 bilden. Die Sauganschlüsse 13 und 15 weisen, wie anhand der Figuren deutlich sichtbar ist, einen größeren Leitungsquerschnitt als der Druckanschluss 7 auf.

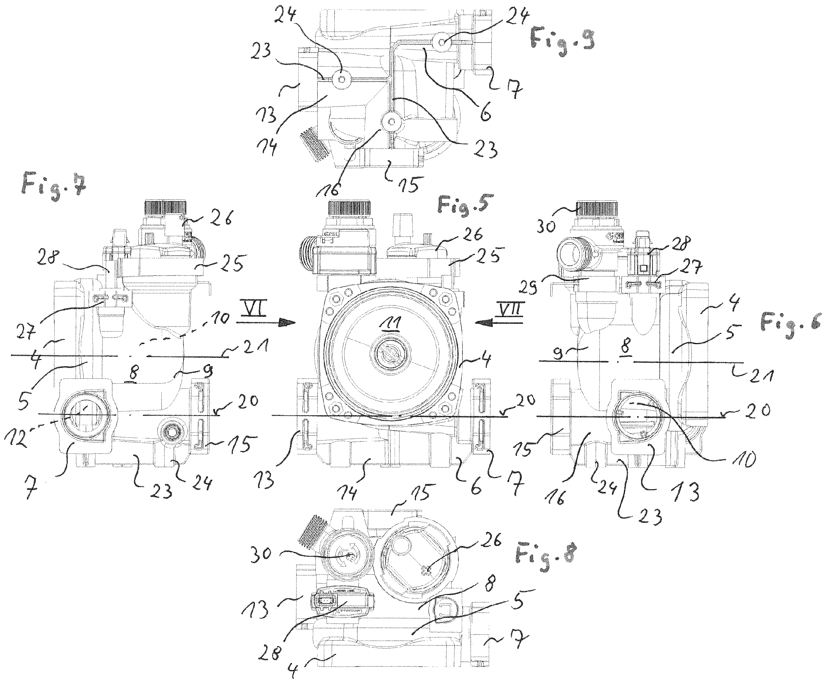

An den Unterseiten dieser Leitungsabschnitte 6, 14, 16 ist jeweils eine Rippe 23 angeformt, die durchgehend alle Leitungsabschnitte 6, 14, 16 an der Unterseite miteinander verbinden, sodass sich eine Rippe 23 ergibt, wie aus Figur 9 ersichtlich ist. Weiterhin sind im Bereich dieser gemeinsamen Rippe 23, die eine gemeinsame Aufstandsfläche für das Pumpengehäuse bildet, Auflager 24 ausgebildet, und zwar jeweils in kurzem Abstand vor den Anschlüssen 7, 13 und 15. Diese Auflager 24 weisen Ausnehmungen zur Aufnahme von Befestigungsschrauben auf, mit denen das Pumpengehäuse 2 und damit das gesamte Kreiselpumpenaggregat auf einem Fundament, zum Beispiel einer Stahlplatte festgelegt werden kann. Die Rippen 23 und Auflager 24 stabilisieren die Unterseite des Pumpengehäuses 2.

An den Saugraum 10 schließt im oberen Bereich zwischen Kappe 9 und zylindrischem Gehäuseabschnitt 8 ein Anschluss 25 an, der Teil einer Luftabscheideeinrichtung bildet, deren Entlüfterventil 26 im Anschluss 25 lösbar eingegliedert ist. Neben dem Anschluss 25 ist in dem zylindrischen Gehäuseabschnitt 8 an der Oberseite ein Anschluss 27 zur Eingliederung eines Sensors 28, hier eines Drucksensors, vorgesehen, sowie ein Anschluss 29 zur Eingliederung eines Überdruckventils 30.

Das dargestellte Pumpengehäuse 2 ist als einstückiges Kunststoffspritzgussbauteil aus Polyphenylensulfid ohne verlorene Kerne hergestellt. Das Gehäuse 2 kann vorteilhaft auch aus Polyamid oder einem anderen geeigneten hochfesten Kunststoff bestehen.

Da die Leitungsanschlüsse 7, 13 und 15 in einer Ebene, hier in der Ebene 20, liegen, ergibt sich nicht nur eine sehr kompakte Bauweise, sondern es können die Leitungsanschlüsse auch vergleichsweise mit großem Querschnitt ausgebildet werden, da diese in dem freien Raum unterhalb von Saugraum 10 und Druckraum 12 liegen und lediglich eine Durchbrechung zu diesen Räumen benötigen.

In dem vorstehend beschriebenen Pumpengehäuse 2 sind die Anschlüsse 7, 13 und 15 als Steckanschlüsse ausgebildet, die, wie bei Einbautenanschlüssen üblich, durch einen u-förmigen Bügel gesichert und einen O-Ring abgedichtet sind. Es können jedoch hier auch Schraubanschlüsse, Flanschanschlüsse oder andere geeignete Anschlüsse vorgesehen sein. Die Sauganschlüsse 13 und 15 haben im dargestellten Ausführungsbeispiel einen ³/₄ Zoll Querschnitt (19,05 mm Leitungsdurchmesser), wohingegen der Druckanschluss 7 einen ¹/₂ Zoll Querschnitt (12,7 mm Leitungsdurchmesser) aufweist. Das Laufrad 31 hat einen Durchmesser von 70 mm, der Durchmesser des Saugraumes beträgt entsprechend ebenfalls 70 mm.

### Bezugszeichenliste

- 1: Antriebsmotor
- 2: Pumpengehäuse
- 3: Klemmenkasten
- 4: Flansch
- 5: ringförmiger Abschnitt
- 6: Leitungsabschnitt zu 7
- 7: Druckanschluss
- 8: zylindrischer Gehäuseabschnitt
- 9: Kappe
- 10: Saugraum
- 11: Deflektorplatte
- 12: Druckraum
- 13: erster Sauganschluss
- 14: Leitungsabschnitt von 13
- 15: zweiter Sauganschluss
- 16: Leitungsabschnitt von 15
- 17: Längsachse von 7
- 18: Längsachse von 13
- 19: Längsachse von 15
- 20: gemeinsame Ebene
- 21: Längsmittelachse
- 23: Rippe
- 24: Auflager
- 25: Anschluss für 26
- 26: Entlüfterventil
- 27: Anschluss für 28
- 28: Drucksensor
- 29: Anschluss für 30
- 30: Überdruckventil
- 31: Pumpenlaufrad
- 32: Spaltrohr

## Patentansprüche

1. Pumpengehäuse, welches als Kunststoffspritzgussbauteil und zum Anschluss an einen Elektromotor (1) ausgebildet ist, mit einem Druckanschluss (7), mit einem an den Saugraum (10) anschließenden Raum (12) zur Aufnahme eines von dem Elektromotor (1) antreibbaren Pumpenlaufrades, in den der Druckanschluss (7) mündet, wobei zwei in den Saugraum (10) mündende Sauganschlüsse (13, 15) vorhanden sind, **dadurch gekennzeichnet, dass** es als einstückiges Kunststoffspritzgussteil ohne verlorene Kerne hergestellt ist und dass der eine Sauganschluss (13) und der andere Druckanschluss (7) an entgegengerichteten Seiten angeordnet sind.

2. Pumpengehäuse nach Anspruch 1, **dadurch gekennzeichnet, dass** der andere Sauganschluss (15) an einer Seite angeordnet ist, welche senkrecht zu den entgegengerichteten Seiten steht.

3. Pumpengehäuse nach Anspruch 1 oder 2, **dadurch gekennzeichnet, dass** die Anschlüsse (7, 13, 15) derart angeordnet sind, dass ihre Längsachsen (17, 18, 19) in einer Ebene (20) liegen, die vorzugsweise parallel zur Drehachse (21) des Pumpenlaufrades ist.

4. Pumpengehäuse nach einem der vorhergehenden Ansprüche, **dadurch gekennzeichnet, dass** der eine Sauganschluss (13) und der Druckanschluss (7) entgegengerichtet und achsversetzt zueinander angeordnet sind.

5. Pumpengehäuse nach einem der vorhergehenden Ansprüche 1 bis 3, **dadurch gekennzeichnet, dass** der eine Sauganschluss und der Druckanschluss entgegengerichtet und achsgleich angeordnet sind.

6. Pumpengehäuse nach einem der vorhergehenden Ansprüche, **dadurch gekennzeichnet, dass** das Gehäuse (2) im Bereich des Saugraums (10) eine im wesentlichen kreiszylindrische Form hat und dass eine Ebene (20), in der zumindest die Längsachsen (18, 19) der Sauganschlüsse (13, 15) liegen, den Zylindermantel schneidet, tangiert oder mit geringem Abstand passiert, und vorzugsweise parallel zur Zylinderachse (21) angeordnet ist.

7. Pumpengehäuse nach einem der vorhergehenden Ansprüche, **dadurch gekennzeichnet, dass** der obere Teil des Saugraumes (10) Teil eines Luftabscheiders bildet oder einen Anschluss (25) für einen Luftabscheider an seiner Oberseite aufweist, wobei die Sauganschlüsse (13, 15) im unteren Teil des Saugraumes (10) münden.

8. Pumpengehäuse nach einem der vorhergehenden Ansprüche, **dadurch gekennzeichnet, dass** die zu den Anschlüssen (7, 13, 15) führenden Leitungsabschnitte (6, 14, 16) an der Außenseite mindestens eine Rippe (23) aufweisen, wobei die Rippen (23) eine gemeinsame Aufstandsfläche bilden.

9. Pumpengehäuse nach Anspruch 6, **dadurch gekennzeichnet, dass** im Bereich der Rippen (23) Auflager (24) zur Befestigung vorgesehen sind, die vorzugsweise Ausnehmungen zur Aufnahme von Befestigungsschrauben aufweisen.

10. Pumpengehäuse nach einem der vorhergehenden Ansprüche, **dadurch gekennzeichnet, dass** zwischen Saugraum (10) und dem Raum (12) zur Aufnahme des Pumpenlaufrades eine umlaufende Anlagefläche für eine einlegbare Deflektorplatte (11) vorgesehen ist, mit welchem der Saugraum (10) gegenüber dem Druckraum (12) hydraulisch getrennt ist.

11. Pumpengehäuse nach einem der vorhergehenden Ansprüche, **dadurch gekennzeichnet, dass** am Saugraum (10) mindestens ein Anschluss (27, 29) für einen Sensor (28), insbesondere einen Drucksensor (28), und/oder für eine Armatur (30), insbesondere ein Überdruckventil (30) vorgesehen ist.

12. Pumpengehäuse nach einem der vorhergehenden Ansprüche, **dadurch gekennzeichnet, dass** der Durchmesser des Saugraumes (10) das drei- bis vierfache des Durchmessers mindestens eines Sauganschlussquerschnitts (13, 15) misst.

13. Kreiselpumpe, insbesondere Heizungsumwälzpumpe mit einem Pumpengehäuse (2) nach einem der vorhergehenden Ansprüche.

14. Kreiselpumpenaggregat mit einer Kreiselpumpe mit einem Pumpengehäuse nach einem der Ansprüche 1 bis 12 und einem daran anschließenden Elektromotor (1), der als Nasslaufmotor ausgebildet ist und das Pumpenlaufrad auf seiner Antriebswelle trägt.

## Claims

1. A pump housing which is designed as a plastic injection moulded component and is designed for connection to an electric motor (1), with at least one suction connection (3) running out into a suction chamber (10) and with a pressure connection (7), with a space (12) which connects to the suction chamber (10), is for receiving a pump impeller drivable by the electric motor (1) and into which the pressure connection (7) runs out, wherein two suction connections (13, 15) which run out into the suction chamber (10) are present, **characterised in that** it is manufactured as a single-piece plastic injection moulded part without lost cores and that the one suction connection (13) and the other pressure connection (7) are arranged at opposed sides.

2. A pump housing according to claim 1, **characterised in that** the other suction connection (15) is arranged on a side which is preferably perpendicular to the opposed side.

3. A pump housing according to claim 1 or 2, **characterised in that** the connections (7, 13, 15) are arranged in a manner such that their longitudinal axes (17, 18, 19) lie in a plane (20) which is preferably parallel to the rotation axis (21) of the pump impeller.

4. A pump housing according to one of the preceding claims, **characterised in that** the one suction connection (13) and the pressure connection (7) are arranged in an oppositely directed and axially offset manner to one another.

5. A pump housing according to one of the preceding claims 1 to 3, **characterised in that** the one suction connection and the pressure connection are arranged in an oppositely directed and axially equal manner.

6. A pump housing according to one of the preceding claims, **characterised in that** the housing (2) in the region of the suction chamber (10) has an essentially circularly cylindrical shape and that a plane (20) in which at least the longitudinal axes (18, 19) of the suction connections (13, 15) lie, intersects the cylinder surface, is tangential thereto or passes it at a small distance, and is preferably arranged parallel to the cylinder axis (21).

7. A pump housing according to one of the preceding claims, **characterised in that** the upper part of the suction chamber (10) forms part of an air separator or comprises a connection (25) for an air separator on its upper side, wherein the suction connections (13, 15) run out in the lower part of the suction chamber (10).

8. A pump housing according to one of the preceding claims, **characterised in that** the conduit sections (6, 14, 16) which lead to the connections (7, 13, 15) comprise at least one rib (23) on the outer side, wherein the ribs (23) form a common contact area.

9. A pump housing according to claim 6, **characterised in that** rests (24) for fastening and which preferably comprise recesses for receiving fastening screws, are provided in the region of the ribs (23).

10. A pump housing according to one of the preceding claims, **characterised in that** a peripheral contact surface for an insertable deflector plate (11) is provided between the suction chamber (10) and the space (12) for receiving the pump impeller, with which deflector plate (11) the suction chamber (10) is hydraulically separated with respect to the pressure chamber (12).

11. A pump housing according to one of the preceding claims, **characterised in that** at least one connection (27, 29) for a sensor (28), in particular a pressure sensor (28), and/or for a fitting (30), in particular a pressure relief valve (30), is provided on the suction chamber (10).

12. A pump housing according to one of the preceding claims, **characterised in that** the diameter of the suction chamber (10) measures threefold to fourfold the diameter of at least one suction connection cross section (13, 15).

13. A centrifugal pump, in particular heating circulation pump with a pump housing (2) according to one of the preceding claims.

14. A centrifugal pump assembly with a centrifugal pump with a pump housing according to one of the claims 1 to 12, and with an electric motor (1) connecting thereto, which is designed as a wet-running motor and carries the pump impeller on its drive shaft.

## Revendications

1. Carter de pompe, qui est réalisé sous forme de composant en plastique moulé par injection et est destiné à être raccordé à un moteur électrique (1), avec un raccord de refoulement (7), avec une chambre (12) attenante à la chambre d'aspiration (10) et destinée à accueillir une roue de pompe pouvant être entraînée par le moteur électrique (1), et dans laquelle débouche le raccord de refoulement (7), deux raccords d'aspiration (13, 15) débouchant dans la chambre d'aspiration (10) étant présents, **caractérisé en ce qu'**il est fabriqué sous forme de pièce en plastique moulée par injection, monobloc, sans noyaux perdus, et **en ce que** le raccord d'aspiration (13) et le raccord de refoulement (7) sont agencés sur des faces opposées.

2. Carter de pompe selon la revendication 1, **caractérisé en ce que** le raccord d'aspiration (15) est agencé sur une face perpendiculaire aux faces opposées.

3. Carter de pompe selon la revendication 1 ou 2, **caractérisé en ce que** les raccords (7, 13, 15) sont agencés de telle manière que leurs axes longitudinaux (17, 18, 19) se trouvent dans un plan (20) qui est de manière préférée parallèle à l'axe de rotation (21) de la roue de pompe.

4. Carter de pompe selon l'une quelconque des revendications précédentes, **caractérisé en ce que** le raccord d'aspiration (13) et le raccord de refoulement (7) sont agencés dans des orientations opposées et avec leurs axes décalés l'un par rapport à l'autre.

5. Carter de pompe selon l'une quelconque des revendications 1 à 3, **caractérisé en ce que** le raccord d'aspiration et le raccord de refoulement sont agencés dans des directions opposées et avec le même axe.

6. Carter de pompe selon l'une quelconque des revendications précédentes, **caractérisé en ce que** le carter (2) présente une forme essentiellement cylindrique circulaire dans la région de la chambre d'aspiration (10) et **en ce qu'**un plan (20) dans lequel se trouvent au moins les axes longitudinaux (18, 19) des raccords d'aspiration (13, 15), coupe, est tangent à, ou dépasse d'une courte distance la chemise de cylindre et, de manière préférée, est agencé parallèlement à l'axe de cylindre (21).

7. Carter de pompe selon l'une quelconque des revendications précédentes, **caractérisé en ce que** la partie supérieure de la chambre d'aspiration (10) fait partie d'un séparateur d'air ou présente sur sa face supérieure un raccord (25) destiné à un séparateur d'air, les raccords d'aspiration (13, 15) débouchant dans la partie inférieure de la chambre d'aspiration (10).

8. Carter de pompe selon l'une quelconque des revendications précédentes, **caractérisé en ce que** les tronçons de conduite (6, 14, 16) menant aux raccords (7, 13, 15) présentent au moins une nervure (23) sur leur face extérieure, les nervures (23) formant une surface d'installation commune.

9. Carter de pompe selon la revendication 6, **caractérisé en ce que** des appuis (24) destinés à la fixation et présentant de manière préférée des évidements destinés à accueillir des vis de fixation sont prévus dans la région des nervures (23).

10. Carter de pompe selon l'une quelconque des revendications précédentes, **caractérisé en ce qu'**il est prévu, entre la chambre d'aspiration (10) et la chambre (12) destinée à recevoir la roue de pompe, une surface circonférentielle de mise en place, destinée à une plaque déflectrice (11) insérable par laquelle la chambre d'aspiration (10) est séparée hydrauliquement de la chambre de refoulement (12).

11. Carter de pompe selon l'une quelconque des revendications précédentes, **caractérisé en ce qu'**au moins un raccord (27, 29) destiné à un capteur (28), en particulier à un capteur de pression (28), et/ou destiné à de la robinetterie (30), en particulier à une soupape de surpression (30), est prévu à la chambre d'aspiration (10).

12. Carter de pompe selon l'une quelconque des revendications précédentes, **caractérisé en ce que** le diamètre de la chambre d'aspiration (10) représente trois à quatre fois le diamètre d'au moins une section transversale de raccord d'aspiration (13, 15).

13. Pompe centrifuge, en particulier pompe de recirculation de chauffage, munie d'un carter de pompe (2) selon l'une quelconque des revendications précédentes.

14. Groupe motopompe centrifuge avec une pompe centrifuge munie d'un carter de pompe selon l'une quelconque des revendications 1 à 12 et un moteur électrique (1) attenant réalisé sous forme de moteur pour milieu humide et dont l'arbre d'entraînement supporte la roue de pompe.
